# EUROPEAN PATENT APPLICATION

(11) **EP 4 152 195 A1**
(43) Date of publication of application: **22.03.2023**
(21) Application number: 21829479.1
(22) Date of filing: 23.03.2021
(51) Int. Cl.: G06F 21/60

(54) **ATOMIC ABILITY INVOKING METHOD AND TERMINAL DEVICE**

(30) Priority: 24.06.2020 CN 202010590329
(71) Applicant: Huawei Technologies Co., Ltd., Longgang District, Shenzhen, Guangdong 518129 (CN)
(72) Inventor: MAO, Zhewen, Shenzhen, Guangdong 518129 (CN); ZHOU, Chong, Shenzhen, Guangdong 518129 (CN); REN, Bingfei, Shenzhen, Guangdong 518129 (CN)
(74) Representative: Thun, Clemens
(86) International application number: PCT/CN2021/082436
(87) International publication number: WO 2021/258795

(57) **Abstract**

An atomic ability invoking method and a terminal device are provided. The method includes: The terminal device obtains an invoking request of an app for an AA. When the AA is deployed in the terminal device, the terminal device starts the AA and grants, to the AA, a resource access permission required by the AA, so that the AA responds to the invoking request based on the resource access permission required by the AA. According to this method, in a process in which the app invokes the AA, the AA has only the resource access permission required by the AA, to prevent the AA from accessing a corresponding system resource based on a resource access permission that the AA should not have. This reduces a risk of privacy data leakage more effectively.

## Description

This application claims priority to Chinese Patent Application No. 202010590329.3, filed with the China National Intellectual Property Administration on June 24, 2020 and entitled "ATOMIC ABILITY INVOKING METHOD AND TERMINAL DEVICE", which is incorporated herein by reference in its entirety.

### TECHNICAL FIELD

This application relates to the field of computer technologies, and in particular, to an atomic ability invoking method and a terminal device.

### BACKGROUND

An atomic ability (atomic ability, AA) is a minimum ability unit that can independently run in a terminal device. Compared with a conventional application (application, APP), the AA is a new application used to provide an atomic service for another app, and the AA has no user interface (UI, User Interface). A distributed application (distributed application) is an application that includes several relatively independent atomic abilities. In addition, an AA deployed in a terminal device may be invoked by an app deployed in the terminal device or another terminal device.

Generally, if an app needs to invoke one AA included in a released distributed application, the app may invoke the AA after various resource access permissions required by the distributed application are granted to the app. In a process in which the app invokes the AA, the AA has not only a resource access permission required by the AA, but also all permissions granted to the app. As a result, the AA may access, based on the various resource access permissions granted to the app, sensitive resources (such as an SMS module, a browser module, and a camera module). This increases a risk of user privacy data (such as an SMS message, a browser history record, and a face image) leakage.

### SUMMARY

Embodiments of this application provide an atomic ability invoking method and a terminal device. In a process in which an app invokes an AA, the AA has only a resource access permission required by the AA, to prevent the AA from accessing a corresponding system resource based on a resource access permission that the AA should not have. This reduces a risk of privacy data leakage more effectively.

According to a first aspect, an atomic ability invoking method is provided. The method may be performed by a terminal device. The method includes: The terminal device obtains a first invoking request of a first app for an AA. Then, when the AA is deployed in the terminal device, the terminal device starts the AA and grants, to the started AA, a resource access permission required by the AA, so that the started AA responds to the first invoking request based on the resource access permission required by the AA. In this way, in a process in which the app invokes the AA, the AA has only the resource access permission required by the AA, to prevent the AA from accessing a corresponding system resource based on a resource access permission that the AA should not have. This reduces a risk of privacy data leakage more effectively.

According to a second aspect, a communications apparatus is provided. The communications apparatus includes a unit or means (means) configured to perform the steps in the first aspect.

According to a third aspect, a terminal device is provided. The terminal device includes the communications apparatus provided in the second aspect.

According to a fourth aspect, a terminal device is provided. The terminal device includes a processor, and the processor is connected to a memory, and is configured to execute computer instructions stored in the memory, so that the terminal device implements the method provided in the first aspect. The memory may be inside the terminal device, or may be outside the terminal device.

According to a fifth aspect, a computer-readable storage medium is provided, configured to store computer instructions. When the computer instructions are executed by a processor of a terminal device, the terminal device is enabled to implement the method provided in the first aspect.

According to a sixth aspect, a computer program product is provided. The computer program product includes computer program code. When the computer program code is run on a computer, the computer is enabled to perform the method provided in the first aspect.

In the foregoing aspects, the terminal device may further determine a resource access permission based on permission information of the AA. The resource access permission is the resource access permission required by the AA. Correspondingly, the terminal device may further determine whether permission information of the first app indicates that the resource access permission is the resource access permission required by the AA. In other words, the terminal device may determine whether the permission information of the first app indicates that the AA is an AA that the first app needs to invoke, and determine whether the permission information of the first app indicates the resource access permission required by the AA.

If the permission information of the first app indicates that the resource access permission is the resource access permission required by the AA, or if the permission information of the first app indicates that a current resource access permission required by the AA is the same as the resource access permission required by the AA, it indicates that the first app has a permission to invoke the AA. In this case, the terminal device may further perform a subsequent processing process for the first invoking request.

If the permission information of the first app does not indicate that the resource access permission is the resource access permission required by the AA, or if the current resource access permission required by the AA and indicated by the permission information of the first app is different from the resource access permission required by the AA, it indicates that the first app may excessively apply for a system resource, and the first app does not have a permission to invoke the AA. In this case, the terminal device may terminate the first invoking request, that is, the terminal device no longer performs a subsequent service processing process related to starting the AA.

In other words, the permission information declared in a configuration file of the app may be used to indicate each AA that the app needs to invoke and a resource access permission required by each AA during running, to prevent the app from excessively applying for the system resource based on the permission information of the app, and resolve a permission redundancy problem existing when a distributed application invokes the AA in an existing coarse-grained permission control model.

In the foregoing aspects, when the permission information of the first app indicates that the resource access permission is the resource access permission required by the AA, the terminal device may further determine, based on authorization information of the first app, whether the first app has been granted the resource access permission required by the AA. If the first app is not granted to the resource access permission required by the AA, it indicates that a user does not expect the first app to invoke the AA to access a corresponding resource, and the terminal device may terminate the first invoking request. On the contrary, when the first app has been granted the resource access permission required by the AA, the terminal device may perform a subsequent processing process for the first invoking request.

In the foregoing aspects, before obtaining the first invoking request of the first app for the AA, the terminal device may further send a first collaboration message to a target terminal device by using an interface circuit of the terminal device. The first collaboration message is used to indicate that the AA is deployed in the terminal device, and the terminal device and the target terminal device belong to a same distributed system. Then, a second invoking request of a second app for the AA is received from the target terminal device by using the interface circuit of the terminal device. The second app is deployed in the target terminal device. Subsequently, a virtual app corresponding to the second app is generated. The first app is the virtual app.

In this way, for the target terminal device that belongs to the same distributed system as the terminal device, the target device may learn that the AA is deployed in the terminal device, and the second app deployed in the target terminal device may perform cross-device invoking on the AA deployed in the terminal device.

In the foregoing aspects, the second invoking request may include permission information of the second app and/or authorization information of the second app. Correspondingly, the terminal device may further generate permission information of the virtual app and/or authorization information of the virtual app. The permission information of the virtual app is the same as the permission information of the second app, and the authorization information of the virtual app is the same as the authorization information of the second app.

In the foregoing aspects, before obtaining the first invoking request of the first app for the AA, the terminal device may further receive a second collaboration message from the target terminal device by using the interface circuit of the terminal device. The second collaboration message is used to indicate that the AA is deployed in the target terminal device. Correspondingly, after obtaining the first invoking request of the first app for the AA, the terminal device may send, based on the first invoking request and the second collaboration message, a third invoking request of the first app for the AA to the target terminal device by using the interface circuit of the terminal device.

In this way, for the target terminal device that belongs to the same distributed system as the terminal device, the terminal device may learn that the AA is deployed in the target terminal device, and the first app deployed in the terminal device may perform cross-device invoking on the AA deployed in the target terminal device.

In the foregoing aspects, the second collaboration message further includes the permission information of the AA, and/or the third invoking request includes the permission information of the first app and/or the authorization information of the first app.

In the foregoing aspects, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in a memory. The memory may be integrated into the processor, or may be outside the processor and independently exist.

In the foregoing aspects, the terminal device may include one or more processors and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

In the foregoing aspects, an information transmission or receiving process may be a process in which the processor receives and sends information. For example, a process of sending the first collaboration message may be outputting the first collaboration message from the processor, and a process of receiving the second collaboration message may be receiving the second collaboration message by the processor. Specifically, information output by the processor may be sent to a transmitter/the interface circuit, and information received by the processor may be from a receiver/the interface circuit. The transmitter and the receiver may be collectively referred to as a transceiver.

### BRIEF DESCRIPTION OF DRAWINGS

The following briefly describes the accompanying drawings that need to be used in the descriptions of embodiments or the conventional technology.
FIG. 1 is a schematic diagram of an application scenario to which an embodiment of this application is applicable;
FIG. 2 is a schematic diagram of a structure of a terminal device according to an embodiment of this application;
FIG. 3 is a schematic diagram of a structure of a software system of a terminal device according to an embodiment of this application;
FIG. 4 is a flowchart of an atomic ability invoking method according to an embodiment of this application;
FIG. 5 is a flowchart of another atomic ability invoking method according to an embodiment of this application;
FIG. 6 is a schematic diagram of an interaction relationship between function modules of a terminal device according to an embodiment of this application;
FIG. 7 is a schematic diagram of permission information of an application according to an embodiment of this application;
FIG. 8 is a schematic diagram of an interaction relationship between function modules of two terminal devices according to an embodiment of this application;
FIG. 9 is a flowchart of still another atomic ability invoking method according to an embodiment of this application; and
FIG. 10 is a schematic diagram of a structure of another terminal device according to an embodiment of this application.

### DESCRIPTION OF EMBODIMENTS

The following describes technical solutions in embodiments of this application with reference to the accompanying drawings.

In embodiments of this application, the words such as "example" or "for example" is used to represent giving an example, an illustration, or a description, and are intended to present a related concept in a specific manner. Any embodiment or design scheme described as an "example" or "for example" should not be explained as being more preferred or having more advantages than another embodiment or design scheme.

The term "and/or" in embodiments of this application describes only an association relationship for describing associated objects and represents that three relationships may exist. For example, A and/or B may represent the following three cases: Only A exists, both A and B exist, and only B exists. In addition, unless otherwise stated, the term "a plurality of" means two or more, and the term "several" means one or more. For example, "a plurality of terminal devices" means two or more terminal devices.

Moreover, the terms "first" and "second" are merely intended for a purpose of description, and shall not be understood as an indication or implication of relative importance or implicit indication of an indicated technical feature. Therefore, a feature limited by "first " or "second" may explicitly indicate or implicitly include one or more such features. The terms "include", "contain", "have", and their variants all mean "include but are not limited to", unless otherwise specifically emphasized in another manner.

A distributed application (distributed application) is an application (application, APP) that includes several relatively independent atomic abilities (atomic ability, AA). The AA may also be described as an atomic service or a function module/unit, and is essentially a program segment that can be independently executed. The AA is characterized by multi-end deployment and distributed execution. To be specific, the distributed application may include a plurality of AAs, and the plurality of AAs may be deployed in a same terminal device or different terminal devices. In addition, an AA deployed in a terminal device may be invoked by an app deployed in the terminal device, or may be invoked by an app deployed in another terminal device.

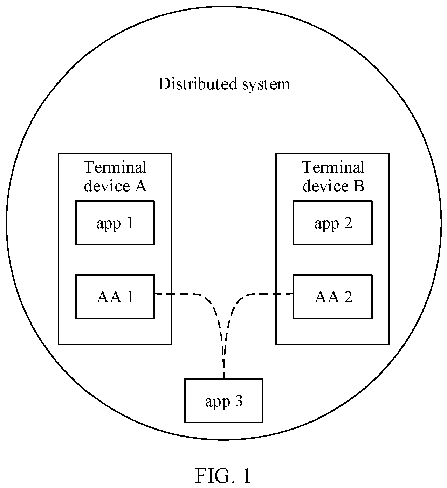

A service scenario shown in FIG. 1 is used as an example. For a terminal device A and a terminal device B in a distributed system, an application app 1 and an atomic ability AA 1 may be deployed in the terminal device A, and an application app 2 and an atomic ability AA 2 may be deployed in the terminal device B. The atomic ability AA 1 and the atomic ability AA 2 may form a distributed application app 3. In addition, the terminal device A may learn the atomic ability AA 2 deployed in the terminal device B. Therefore, the atomic ability AA 2 may be invoked by the application app 2 deployed in the terminal device B, and may also be invoked by the application app 1 deployed in the terminal device A. Based on a principle similar to that of the AA 2, the AA 1 may be invoked by the app 1 and the app 2. In this way, the app 1 and the AA 1 and/or the AA 2 invoked by the app 1 may form a distributed application, and the app 2 and the AA 1 and/or the AA 2 invoked by the app 2 may form a distributed application.

It should be noted that the service scenario shown in FIG. 1 is merely used to assist in describing the technical solutions in embodiments of this application. In an actual service scenario, the distributed system may include more terminal devices, more or fewer apps may be deployed in each terminal device, more or fewer AAs may be deployed in each terminal device, each distributed application may include more AAs, and all or some AAs included in a same distributed application may be deployed in a same terminal device.

Generally, if an app needs to invoke one of several AAs included in a released distributed application, a configuration file of the app needs to declare various resource access permissions required by the distributed application, that is, various resource access permissions that the app needs to apply for. The various resource access permissions include not only a resource access permission required by the AA that will be invoked by the app, but also a resource access permission required by another AA that will not be invoked by the app. In a process in which the app invokes the AA, the AA may be encapsulated as a dynamic library and loaded to a process in which the app is located for execution. In this way, because the dynamic library corresponding to the AA and the app are in a same process, the AA has not only the resource access permission required by the AA, but also all permissions granted to the app. As a result, the AA may access, based on the various resource access permissions granted to the app, sensitive resources (such as an SMS module, a browser module, and a camera module). This increases a risk of user privacy data (such as an SMS message, a browser history record, and a face image) leakage.

For example, the distributed application app 3 includes the atomic ability AA 1 and the atomic ability AA 2, the atomic ability AA 1 needs to have a permission to access a camera (Camera) module, and the atomic ability AA 2 needs to have a permission to access a phone (Phone) module. If the application app 1 may invoke the atomic ability AA 2, a configuration file of the application app 1 generally declares that the application app 1 needs to have permissions to access the camera module and the phone module. After the application app 1 is granted the permissions to access the camera module and the phone module, the application app 1 is allowed to invoke the atomic ability AA 2, and the invoked atomic ability AA 2 may access the camera module and the phone module based on the permissions granted to the application app 1. However, a resource access permission required by the AA 2 is the permission to access the phone module, and the AA 2 should not have the permission to access the camera module. The AA 2 may capture a face image of a user or perform another service by accessing the camera module, resulting in leakage of the face image that acts on user privacy data.

In view of this, embodiments of this application provide an atomic ability invoking method and a terminal device. The terminal device may obtain an invoking request of an app for an AA, and when the AA is deployed in the terminal device, the terminal device starts the AA and grants, to the started AA, a resource access permission required by the AA, so that the started AA can access a corresponding system resource based on the resource access permission that is required by and has been granted to the AA, to respond to the invoking request. In this way, in a process in which the app invokes the AA, the AA has only the resource access permission required by the AA, to prevent the AA from accessing a corresponding system resource based on a resource access permission that the AA should not have. This reduces a risk of privacy data leakage more effectively.

The following first describes, by using an example, the terminal device provided in embodiments of this application. In embodiments of this application, the terminal device may include but is not limited to a mobile phone, a tablet computer, a notebook computer, an ultra-mobile personal computer (ultra-mobile personal computer, UMPC), a personal digital assistant (personal digital assistant, PDA), or a wearable device. This is not limited.

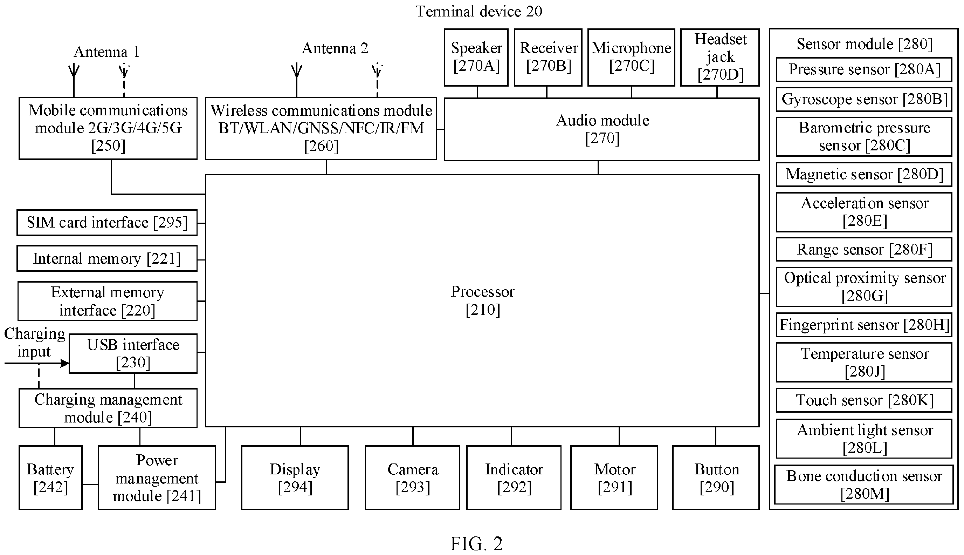

FIG. 2 is a schematic diagram of a hardware structure of a terminal device according to an embodiment of this application. As shown in FIG. 2, the terminal device 20 may include a processor 210 and an internal memory 221. The terminal device 20 may further include one or more of an external memory interface 220, a universal serial bus (universal serial bus, USB) interface 230, a charging management module 240, a power management module 241, a battery 242, an antenna 1, an antenna 2, a mobile communications module 250, a wireless communications module 260, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identity module, SIM) card interface 295, and the like. The sensor module 280 may include one or more of a pressure sensor 280A, a gyroscope sensor 280B, a barometric pressure sensor 280C, a magnetic sensor 280D, an acceleration sensor 280E, a range sensor 280F, an optical proximity sensor 280G, a fingerprint sensor 280H, a temperature sensor 280J, a touch sensor 280K, an ambient light sensor 280L, a bone conduction sensor 280M, and the like.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural network processing unit, NPU). Different processing units may be independent components, or may be integrated into one or more components.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated data access and reduces a waiting time of the processor 210, thereby improving system efficiency.

The processor 210 runs computer instructions stored in the internal memory 221 and/or computer instructions stored in the memory disposed in the processor 210, to implement various functions of the terminal device 20 and a data processing process, for example, to implement the atomic ability invoking method provided in this embodiment of this application.

The processor 210 may include one or more interfaces, for example, include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface.

The I2C interface is a two-way synchronization serial bus, and includes one serial data line (serial data line, SDA) and one serial clock line (serial clock line, SCL). In some embodiments, the processor 210 may include a plurality of groups of I2C buses, and may be separately coupled to the touch sensor 280K, a charger, a flash, the camera 293, and the like through different I2C bus interfaces, so that the terminal device 20 can implement a corresponding function. For example, the processor 210 may be coupled to the touch sensor 280K through the I2C interface, so that the processor 210 communicates with the touch sensor 280K through the I2C bus interface, to implement a touch function of the terminal device 20.

The I2S interface may be configured to perform audio communication. In some embodiments, the processor 210 may include a plurality of groups of I2S buses, and may be separately coupled to the audio module 270, the wireless communications module 260, and the like through different I2S buses. For example, the processor 210 may send an audio signal to the wireless communications module 260 through the I2S interface, to implement a function of answering a call by the terminal device 20 by using a wireless headset.

The PCM interface may be configured to perform audio communication, and is specifically configured to: sample, quantize, and code an analog signal. In some embodiments, the audio module 270 may be coupled to the wireless communications module 260 through the PCM interface, so that the audio module 270 may send an audio signal to the wireless communications module 260 through the PCM interface, to implement a function of answering a call by the terminal device 20 by using a wireless headset.

The UART interface is a universal serial data bus, and is configured to perform asynchronous communication. Specifically, the UART interface may be a two-way communications bus, and convert to-be-transmitted data between serial communication and parallel communication. In some embodiments, the UART interface is generally configured to connect the processor 210 and the wireless communications module 260. For example, the processor 210 is connected, through the UART interface, to a Bluetooth module included in the wireless communications module 260, so that the audio module 270 can transmit an audio signal to the wireless communications module 260 through the UART interface, to implement a function of playing music by the terminal device 20 by using a Bluetooth headset.

The MIPI interface may be configured to connect components such as the camera 293 and the display 294 to the processor 210. Specifically, the MIPI interface may include a camera serial interface (camera serial interface, CSI) and a display serial interface (display serial interface, DSI). In some embodiments, the processor 210 communicates with the camera 293 through the CSI interface, to implement a photographing function of the terminal device 20. The processor 210 communicates with the display 294 through the DSI interface, to implement a display function of the terminal device 20.

The GPIO interface may be configured by software, and is configured to transmit a control signal or a data signal. In some embodiments, the GPIO interface may be configured to connect components such as the camera 293, the display 294, the wireless communications module 260, the audio module 270, and the sensor module 280 to the processor 210. Specifically, the GPIO interface may alternatively be configured as an I2C interface, an I2S interface, a UART interface, or an MIPI interface.

The USB interface 230 is an interface that conforms to USB standard specifications, and may specifically be a mini USB interface, a micro USB interface, or a USB Type-C interface. The USB interface 230 may be configured to connect to the charger to charge the terminal device 20, and may be further configured to transmit data between the terminal device 20 and a peripheral device, for example, configured to connect to an augmented reality (augmented reality, AR) device to transmit corresponding data to the AR device.

It may be understood that an interface connection relationship between the components described as an example in this embodiment of this application does not constitute a limitation on the structure of the terminal device. In some embodiments of this application, the terminal device 20 may alternatively use an interface connection manner different from that in the foregoing example description, or may use a combination of a plurality of interface connection manners.

The charging management module 240 is configured to receive a charging input from the charger. The charger may be a wireless charger or a wired charger. In some embodiments of wired charging, the charging management module 240 may receive a charging input of a wired charger through the USB interface 230. In some embodiments of wireless charging, the charging management module 240 may receive a charging input of a wireless charger through a wireless charging coil of the terminal device 20. The charging management module 240 may supply power to another component in the terminal device 20 by using the power management module 241 while charging the battery 242 based on the charging input received by the charging management module 240.

The power management module 241 is configured to connect the battery 242 and the charging management module 240 to the processor 210. The power management module 241 receives an input of the battery 242 and/or the charging management module 240, and supplies power to components such as the processor 210, the internal memory 221, the camera 293, the display 294, and the wireless communications module 260. In some embodiments, the power management module 241 may further be configured to monitor parameters such as a battery capacity, a battery cycle count, and a battery health status (for example, electric leakage or impedance). In some embodiments, the power management module 241 may be disposed in the processor 210. In some embodiments, the power management module 241 and the charging management module 240 may be disposed in a same device.

The terminal device 20 may cooperate with components such as the antenna 1, the antenna 2, the mobile communications module 250, the wireless communications module 260, the modem, and the baseband processor to implement a wireless communication function of the terminal device 20.

The antenna 1 and the antenna 2 each are configured to transmit and receive electromagnetic wave signals. The antenna 1 and the antenna 2 each may cover one or more communications frequency bands, and may further multiplex different antennas to improve antenna utilization. In some embodiments, the antenna 1 may be multiplexed as a diversity antenna of a wireless local area network.

The mobile communications module 250 is configured to support a solution, applied to the terminal device 20, to wireless communications technologies such as 2G, 3G, 4G, and 5G. The mobile communications module 250 may include function modules such as a filter, a switch, a power amplifier, and a low noise amplifier (low noise amplifier, LNA). The mobile communications module 250 may receive an electromagnetic wave through the antenna 1, perform processing such as filtering or amplification on the received electromagnetic wave, and send a processed signal to the modem for demodulation. The mobile communications module 250 may further amplify a signal modulated by the modem, and convert an amplified signal into an electromagnetic wave for radiation through the antenna 1. In some embodiments, some function modules in the mobile communications module 250 may be disposed in the processor 210. In some embodiments, some function modules in the mobile communications module 250 and some function modules in the processor 210 may be integrated and disposed in a same device.

The modem may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then sent to the application processor. The application processor outputs a sound signal by using an audio device (which is not limited to the speaker 270A or the receiver 270B), or displays an image or a video by using the display 294. In some embodiments, the modem may be an independent component. In some embodiments, the modem may be independent of the processor 210, and is disposed in a same device as the mobile communications module 250 or another function module.

The wireless communications module 260 is configured to support a solution, applied to the terminal device 20, to wireless communications technologies such as a wireless local area network (wireless local area network, WLAN), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communications module 260 may be one or more components integrating at least one communications processing module. The wireless communications module 260 receives an electromagnetic wave through the antenna 2, performs frequency modulation and filtering processing on the electromagnetic wave signal, and sends a processed signal to the processor 210. The wireless communications module 260 may further receive a to-be-sent signal from the processor 210, perform frequency modulation and amplification on the signal, and convert the signal into an electromagnetic wave for radiation through the antenna 2.

In the terminal device 20, the antenna 1 and the mobile communications module 250 are coupled, and the antenna 2 and the wireless communications module 260 are coupled, so that the terminal device 20 can communicate with another device by using a wireless communications technology. It should be understood that the wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and the like. The GNSS may include but is not limited to a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and a satellite based augmentation system (satellite based augmentation system, SBAS).

The terminal device 20 may cooperate with components such as the GPU, the display 294, and the application processor to implement a display function.

The GPU is a microprocessor for image processing, and may be connected to the display 294 and the application processor. The GPU is configured to: perform mathematical and geometric computation, and render an image. The processor 210 may include one or more GPUs that execute program instructions to generate or change display information.

The display 294 is configured to display an image and a video. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, or a quantum dot light emitting diode (quantum dot light emitting diode, QLED). In some embodiments, the terminal device 20 may include one or more displays 294.

The terminal device 20 may implement a photographing function by using the ISP, the camera 293, the video codec, the GPU, the display 294, the application processor, and the like.

The camera 293 is configured to capture an image or a video. For example, when the camera 293 photographs an image or a video, light is transmitted to a photosensitive element of the camera through a lens of the camera, an optical signal is converted into an electrical signal on the photosensitive element, and the photosensitive element transmits the electrical signal to the ISP for processing, so that the ISP may process the electrical signal to obtain a visible image. The photosensitive element of the camera 293 may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. In some embodiments, the terminal device 20 may include one or more cameras 293.

The ISP is configured to process data fed back by the camera 293. For example, the ISP is configured to process an electrical signal from the camera 293 to obtain a visible image, or is configured to: process an electrical signal from the camera 293 to obtain a digital image signal, and transmit the digital image signal to the DSP. The ISP may further perform algorithm optimization on noise, brightness, and complexion of the image. The ISP may further optimize parameters such as exposure and a color temperature of a photographing scenario. In some embodiments, the ISP may be integrated and disposed in the camera 293.

The DSP is configured to convert the digital image signal from the ISP into an image signal in a standard RGB or YUV format. In some embodiments, the DSP may further be configured to process a digital signal in another form. For example, when the terminal device 20 selects a frequency, the DSP may perform Fourier transform on frequency energy.

The video codec is configured to compress or decompress a digital video. The terminal device 20 may support one or more video codecs. In this way, the terminal device 20 may play or record videos in a plurality of coding formats, for example, moving picture experts group (moving picture experts group, MPEG)-1, MPEG-2, MPEG-3, and MPEG-4.

The NPU is a neural network (neural network, NN) computing processor, quickly processes input information by referring to a structure of a biological neural network, and may further continuously perform self-learning. The NPU may be configured to support applications such as intelligent cognition of the terminal device 20, for example, configured to support image recognition, facial recognition, speech recognition, and text semantic analysis.

The controller may be a nerve center and a command center of the terminal device 20, and is configured to generate an operation control signal based on instruction operation code and a time sequence signal, to control instruction fetching and instruction execution.

The external memory interface 220 may be configured to connect to an external memory card, for example, a micro SD card, to extend a storage capability of the terminal device 20. The external memory card communicates with the processor 210 through the external memory interface 220, to implement a data storage function. For example, files such as music and a video are stored in the external memory card.

The internal memory 221 may be configured to store computer-executable program code, and the computer-executable program code includes computer instructions. The internal memory 221 may include a program storage area and a data storage area. The program storage area may store an operating system and an application corresponding to each function (for example, a sound playing function and an image playing function) of the terminal device 20. The data storage area may store data (for example, audio data) created when the terminal device 20 is used. In addition, the internal memory 221 may include a high-speed random access memory and a nonvolatile memory, for example, include a magnetic disk storage, a flash memory, and a universal flash storage (universal flash storage, UFS).

The terminal device 20 may cooperate with components such as the audio module 270, the speaker 270A, the receiver 270B, the microphone 270C, the headset jack 270D, and the application processor, to implement an audio function such as recording or music playing.

The audio module 270 is configured to convert a digital audio signal from the application processor into an analog audio signal, and is also configured to convert an analog audio from the microphone into a digital audio signal. The audio module 270 may further be configured to code and decode an audio signal. In some embodiments, the audio module 270 may be disposed in the processor 210, or some function modules in the audio module 270 may be disposed in the processor 210.

The speaker 270A, also referred to as a "horn", is configured to convert an audio signal from the audio module 270 into a sound signal. The terminal device 20 may play music or be on a hands-free call by using the speaker 270A.

The receiver 270B, also referred to as an "earpiece", is configured to convert an audio signal from the audio module 270 into a sound signal. A user may answer a call or receive voice information by putting the receiver 270B close to a human ear.

The microphone 270C, also referred to as a "mike" or a "microphone", is configured to convert a sound signal into an electrical signal. When making a call or sending voice information by using the terminal device 20, the user may make a sound near the microphone 270C through the mouth of the user, and the microphone 270 may receive a corresponding sound signal and convert the sound signal into an electrical signal. In some embodiments, one or more microphones 270C may be disposed in the terminal device 20, to perform noise reduction on the sound signal and identify a source of the sound signal while collecting the sound signal.

The headset jack 270D is configured to connect to a wired headset. The headset jack 270D may be the USB interface 230, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 280A is configured to sense a pressure signal, and can convert the pressure signal into an electrical signal. There are a plurality of types of pressure sensors 280A. For example, the pressure sensor 280A may be a resistive pressure sensor, an inductive pressure sensor, or a capacitive pressure sensor. The capacitive pressure sensor may include at least two parallel plates having conductive materials. When pressure is applied to the pressure sensor 280A, capacitance between the parallel plates changes. The processor 210 may determine pressure intensity based on the change of the capacitance. In some embodiments, the pressure sensor 280A may be disposed on the display 294. When a touch operation is performed on the display 294, the processor 210 may detect touch strength of the touch operation by using the pressure sensor 280A. The processor 210 may also calculate a touch location based on a detection signal of the pressure sensor 280A. In some embodiments, touch operations that are performed at a same touch location but have different touch operation strength may correspond to different operation instructions. For example, when a touch operation whose touch operation strength is less than a preset pressure threshold is performed on an icon of Messages, the processor executes an operation instruction corresponding to viewing an SMS message. When a touch operation whose touch operation strength is greater than or equal to the preset pressure threshold is performed on the icon of Messages, the processor executes an operation instruction corresponding to creating a new SMS message.

The gyroscope sensor 280B may be configured to determine a motion posture of the terminal device 20. In some embodiments, angular velocities of the terminal device 20 around three axes (that is, x, y, and z axes) may be determined by using the gyroscope sensor 280B. The gyroscope sensor 280B may be configured to implement image stabilization during photographing. For example, the gyroscope sensor 280B may be configured to: detect an angle at which the terminal device 20 jitters, calculate, based on the angle, a distance for which the lens of the camera 293 needs to compensate, and allow the lens to cancel the jitter of the terminal device 20 through reverse motion, to implement image stabilization. In some embodiments, the gyroscope sensor 280B may further be configured to support the terminal device in implementing a navigation function of the terminal device, and configured to support the user in performing a motion-controlled game by using the terminal device 20.

The barometric pressure sensor 280C is configured to measure barometric pressure. In some embodiments, the processor 210 may calculate an altitude based on a barometric pressure value measured by the barometric pressure sensor 280C, to support the terminal device 20 in implementing auxiliary positioning and navigation.

The magnetic sensor 280D includes a Hall effect sensor. The terminal device 20 may detect, by using the magnetic sensor 280D, an opening/closing state of a flip cover sleeved on the terminal device 20. In some embodiments, when the terminal device 20 is a flip phone, the terminal device 20 may detect an opening/closing state of a flip cover of the terminal device 20 by using the magnetic sensor 280D. Correspondingly, the terminal device 20 may implement a function of automatically unlocking or locking the display 294 based on a detected opening/closing state of the flip cover.

The acceleration sensor 280E may detect accelerations in various directions of the terminal device 20, and may further be configured to support a step counting function of the terminal device 20 and a graphical user interface in switching between a landscape mode and a portrait mode on the display 294.

The range sensor 280F is configured to measure a distance. The terminal device 20 may measure a distance between a target object and the terminal device 20 by transmitting and receiving infrared light or infrared laser light. In some embodiments, the terminal device 20 may measure a distance between a photographed object and the camera 293 by using the range sensor 280F, to implement fast focusing.

The optical proximity sensor 280G includes but is not limited to a light-emitting diode (LED) and an optical detector. The light-emitting diode may be an infrared light-emitting diode. The optical detector may be a photodiode. The terminal device 20 emits infrared light by using the light-emitting diode. The terminal device 20 may detect, by using the photodiode, infrared light reflected by the target object. When the photodiode detects infrared light that meets a specific condition, it may be determined that there is a target object near the terminal device 20. The terminal device 20 may detect, by using the optical proximity sensor 280G, whether the terminal device is close to a human ear when the user holds the terminal device 20 for a call, so that the display automatically performs screen-off after the terminal device is close to the human ear, to save power. The optical proximity sensor 280G may be further configured to support the terminal device 20 in implementing a smart cover mode or a pocket mode of the terminal device 20.

The ambient light sensor 280L is configured to sense ambient light brightness. The processor 210 may adaptively adjust brightness of the display 294 based on the ambient light brightness sensed by the ambient light sensor 280L. The ambient light sensor 280L may further be configured to support the terminal device 20 in automatically adjusting white balance when shooting a picture or a video by using the camera 293. The ambient light sensor 280L may further cooperate with the optical proximity sensor 280G to support the terminal device 20 in detecting whether the terminal device 20 is located in a pocket, to avoid an accidental touch of the display.

The fingerprint sensor 280H is configured to collect a fingerprint of the user. In this way, the terminal device 20 may implement fingerprint-based unlocking, application lock access, fingerprint-based photographing, and fingerprint-based call answering based on the fingerprint collected by the fingerprint sensor 280H.

The temperature sensor 280J is configured to detect a temperature. In some embodiments, the terminal device 20 executes a temperature processing policy by using the ambient temperature detected by the temperature sensor 280J. For example, when the temperature reported by the temperature sensor 280J exceeds a threshold, the terminal device 20 lowers performance of a processor near the temperature sensor 280J, to reduce power consumption for thermal protection. In some embodiments, when the temperature reported by the temperature sensor 280J is lower than another threshold, the terminal device 20 heats the battery 242 to prevent the terminal device 20 from being shut down abnormally because of a low temperature. In some embodiments, when the temperature reported by the temperature sensor 280J is less than still another threshold, the terminal device 20 boosts an output voltage of the battery 242 to avoid abnormal shutdown caused by a low temperature.

The touch sensor 280K may also be referred to as a "touch component". The touch sensor 280K may be disposed on the display 294. The touch sensor 280K and the display 294 constitute a touchscreen, which is also referred to as a "touchscreen". The touch sensor 280K is configured to detect a touch operation performed on or near the touch sensor 280K. The touch sensor 280K may transfer the detected touch operation to the application processor, so that the application processor determines a touch event type corresponding to the touch operation. In some embodiments, the terminal device 20 may provide a visual output related to the touch operation by using the display 294. In some embodiments, the touch sensor 280K may alternatively be disposed on a surface of the terminal device 20, and is independent of the display 294.

The bone conduction sensor 280M may obtain a vibration signal. In some embodiments, the bone conduction sensor 280M may obtain a vibration signal of a vibration bone of a human vocal-cord part. The bone conduction sensor 280M may also be in contact with a specific part of a human body to collect a pulse signal and a blood pressure signal of the human body. In some embodiments, the bone conduction sensor 280M may be disposed in a headset, to obtain a bone conduction headset. The audio module 270 may obtain a voice signal through parsing based on the vibration signal that is of the vibration bone of the vocal-cord part and that is obtained by the bone conduction sensor 280M, to implement a voice function. In some embodiments, the application processor may parse heart rate information based on the blood pressure signal obtained by the bone conduction sensor 280M, to implement a heart rate detection function.

The button 290 includes but is not limited to a power button and a volume button. The button 290 may be a mechanical button, or may be a touch button. The user may generate, by triggering the button 290, an input signal/instruction related to a user setting and function control of the terminal device 20.

The motor 291 may be configured to provide an incoming call vibration prompt and a touch vibration feedback. Specifically, touch operations performed by the user on icons (for example, an icon corresponding to Camera, an icon corresponding to Calendar, and an icon corresponding to Messages) corresponding to different applications may correspond to different vibration feedback effects. Touch operations performed by the user on different types of applications (for example, an instant messaging application, an audio application, and a video application) may correspond to different vibration feedback effects. Different application scenarios (for example, receiving notification information of an application and a game) may also correspond to different vibration feedback effects. It may be understood that touch vibration feedback may be set by the user with reference to an actual service requirement of the user.

The indicator 292 may be an indicator light, and is configured to indicate a charging status of the terminal device 20, or may be configured to indicate whether there is a missed call and whether there is information or a notification that is not viewed on the terminal device 20.

The display 294 is configured to display a graphical user interface of each application at an application layer. It may be understood that the terminal device 20 may include one or more displays 294. Alternatively, the terminal device 20 may include only one display 294, but the display can be divided into a plurality of display areas under control of the user. For example, the terminal device 20 may include only one foldable flexible display, but the display may be folded under control of the user and divided into two displays (that is, divided into two display areas) along a corresponding folding line. A plurality of displays 294 of a same terminal device 20 may independently display different graphical user interfaces, or may separately display some areas of a same graphical user interface and cooperate with each other to display a complete graphical user interface.

The SIM card interface 295 is configured to connect to a SIM card, so that the terminal device 20 can exchange information with a wireless network or a corresponding device by using the SIM card, to implement functions such as calling and data communication. The SIM card may be inserted into the SIM card interface 295 or detached from the SIM card interface 295, so that the SIM card is in contact with and separated from the terminal device 20. Alternatively, the SIM card may be an embedded SIM card that cannot be separated from the SIM card. It may be understood that the terminal device 20 may include one or more SIM card interfaces, and the SIM card interfaces 295 may be respectively connected to different SIM cards, or one SIM card interface 295 of the terminal device 20 may be simultaneously connected to a plurality of SIM cards.

It should be noted that the structure of the terminal device 20 described as an example in this embodiment of this application does not constitute a limitation on a specific structure of the terminal device. In some embodiments, the terminal device may include more or fewer components of the terminal device 20 shown in FIG. 2, or may combine some components of the terminal device 20 shown in FIG. 2, or may further split some components of the terminal device 20 shown in FIG. 2. As shown in FIG. 2, components of the terminal device 20 may further have another connection relationship.

A software system deployed in the terminal device 20 may use a layered architecture, a microkernel architecture, or a cloud architecture. In this embodiment of this application, for example, the software system deployed in the terminal device 20 uses an Android (Android) system with a layered architecture. An example of a structure of the software system deployed in the terminal device 20 is described.

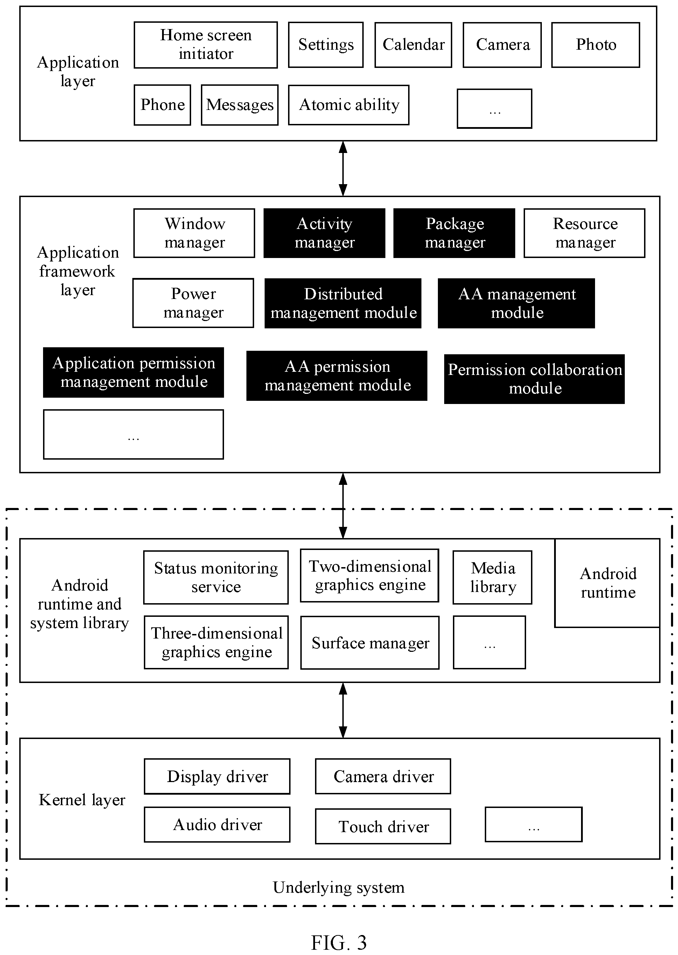

FIG. 3 is a schematic diagram of the structure of the software system deployed in the terminal device 20. As shown in FIG. 3, the Android system may be divided into four layers: an application layer, an application framework layer, a system library and Android runtime (Android runtime), and a kernel layer from top to bottom. Each layer has a clear role and task. The layers communicate with each other through a software interface.

The application layer includes a series of apps and AAs deployed in the terminal device 20. For example, the application layer may include but is not limited to a home screen initiator (Launcher), a settings module, a calendar module, a camera module, a photo module, a phone module, and an SMS message module.

The application framework layer provides an application programming interface (application programming interface, API) and a programming framework for an app and an AA at the application layer. The application framework layer may include some predefined function modules/services. For example, the application framework layer may include but is not limited to a window manager (Window manager), an activity manager (Activity manager), a package manager (Package manager), a resource manager (Resource manager), a power manager (Power manager), and an application permission management module.

The activity manager may be configured to maintain a life cycle of an app, implement a navigation rollback function of the app, and be responsible for maintaining an entire life cycle of an activity process of the app. In this embodiment of this application, the activity manager may further be responsible for responding to invoking an AA by the app, creating a service process of the AA, and maintaining an entire life cycle of the service process of the AA.

The window manager is configured to manage a window program. It may be understood that a graphical user interface of each app at the application layer generally includes one or more activities, and the activity further includes one or more views (View). The window manager may be configured to add, to the display 294, a view included in the graphical user interface that needs to be displayed, or configured to remove the view from the graphical user interface displayed on the display 294. In some embodiments, the window manager may further obtain a size of the display 294, determine whether there is a status bar in the graphical user interface displayed on the display 294, and is configured to support in locking the display 294 and capturing the graphical user interface displayed on the display 294.

The package manager may manage a data packet of an app, for example, is configured to decompress, verify, install, and upgrade the data packet of the app. In this embodiment of this application, the package manager may further be responsible for managing an installation package of an AA, and is responsible for permission check when an app accesses a system resource and when the AA accesses the system resource.

The resource manager may provide access to various non-code resources, such as a localized character string, a graphic, and a layout file, for each app at the application layer.

The power manager is a core service of power management of the Android system, and is mainly configured to execute a computing task related to the power management of the Android system. A decision is made downward to control a bottom-layer system of the Android system to turn on or turn off the display, and start or stop a hardware device such as the range sensor and the optical proximity sensor. A corresponding operation interface is provided upward, so that each application at the application layer can invoke the operation interface, to achieve a specific service objective. For example, when the terminal device 20 plays audio by using the application "Music", the display 294 of the terminal device 20 continuously keeps in a turn-on state. For another example, each application turns on the display 294 of the terminal device 20 when receiving a notification.

The application permission management module is configured to manage permission information of an app, and is responsible for access control for the app to access the system resource. In this embodiment of this application, the permission information of the app is used to indicate a resource access permission required by each AA that may be invoked by the app.

In this embodiment of this application, the application framework layer may further include one or more of a distributed management module, an AA management module, an AA permission management module, and a permission collaboration module. These modules may collaborate with other modules in the terminal device to implement the atomic ability invoking method provided in embodiments of this application. In other words, these modules may be organic compositions of an atomic ability invoking apparatus provided in embodiments of this application.

The distributed management module may be responsible for functions such as discovery, installation, and invoking of an AA. For example, the distributed management module is configured to respond to an invoking request of an app for an AA, and trigger related service processes of the AA management module, the package manager, and the permission collaboration module.

The AA management module may be configured to manage registration information of an AA, and implement functions such as registration and information query of the AA. For example, the AA management module is configured to manage an identifier of an AA and an identifier of a terminal device in which the AA is deployed.

The AA permission management module may be configured to manage permission information of an AA, and is responsible for invoking the AA by an app and access control of accessing the system resource by the AA. The permission information of the AA is used to indicate a resource access permission required by the AA.

The permission collaboration module may be configured to be responsible for synchronizing permission information of an AA and/or permission information of an app and/or authorization information of the app that are/is deployed in each of a plurality of terminal devices. The plurality of terminal devices and the terminal device in which the AA permission management module is deployed belong to a same distributed system.

In some embodiments, the application permission management module and the AA permission management module may be integrated and disposed as a permission management system, and the permission collaboration module may further be integrated into the permission management system.

The system library and Android runtime and the kernel layer below the application framework layer may be referred to as an underlying system. The underlying system includes an underlying display system used to provide a display service. The underlying display system may include but is not limited to a surface manager (surface manager) in the system library and a display driver at the kernel layer.

It may be understood that the Android runtime is responsible for scheduling and management of the Android system, including a kernel library and a virtual machine. Computer programs at the application layer and the application framework layer run in virtual machines. More specifically, the virtual machine may execute java files of the application layer and the application framework layer as binary files. The virtual machine may further be configured to implement functions such as object lifecycle management, stack management, thread management, security management, and garbage collection.

It may be understood that the system library may further include a plurality of function modules other than the surface manager. For example, a status monitoring service, a media library (Media Library), a three-dimensional graphics engine (for example, OpenGL for Embedded Systems), and a two-dimensional graphics engine may further be included.

The surface manager may provide fusion of two-dimensional graphics and three-dimensional graphics for various applications.

The status monitoring service may receive data reported by each driver at the kernel layer.

The media library may support playback and collection of images/ audio/videos in a plurality of common formats. The three-dimensional graphics engine is configured to implement drawing, rendering, and compositing of a three-dimensional image.

The two-dimensional graphics engine is configured to implement drawing and rendering of a two-dimensional image.

The kernel layer is a layer between hardware and software, and the kernel layer includes several hardware drivers. For example, the kernel layer may include a display driver, a camera driver, an audio driver, and a touch driver. Each driver may separately collect information collected by corresponding hardware, and report corresponding monitoring data to the status monitoring service or another function module in the system library.

The following describes an example of a process in which the terminal device deploys the AA.

First, in the software system of the terminal device, after the terminal device successfully downloads an installation package of the AA, the distributed management module may send an installation request for the AA to the package manager. The installation request may carry a storage path of the installation package of the AA in the terminal device.

Then, the package manager may obtain and parse the installation package of the AA based on the storage path of the installation package of the AA in the terminal device, for example, parse a code file, a resource file, and a configuration file that are included in the installation package of the AA. The package manager may obtain permission information of the AA by parsing the configuration file. In addition, the package manager may provide the permission information of the AA to the AA permission management module, perform another related service operation to complete an installation process of the AA, and send a broadcast message to the AA management module after completing the AA installation procedure.

After obtaining the permission information of the AA, the AA permission management module may maintain the permission information of the AA, for example, store the permission information of the AA in a corresponding AA permission library. The AA management module may maintain the registration information of the AA based on a broadcast message from the package manager. The registration information may be used to indicate an association relationship between the identifier of the AA and the identifier of the terminal device.

In some embodiments, after the AA is successfully installed in the terminal device, if the terminal device is one of the plurality of terminal devices included in the distributed system, the terminal device may further provide the permission information and the registration information of the AA for another terminal device in the distributed system by using the permission collaboration module in the software system of the terminal device. Correspondingly, the terminal device may further learn, by using the permission collaboration module in the software system of the terminal device, registration information and permission information of AAs deployed in another terminal device of the distributed system, then the AA management module maintains the registration information learned by the permission collaboration module, and the AA permission management module maintains the permission information learned by the permission collaboration module.

In the foregoing process, the terminal device may learn permission information and registration information of an AA deployed in the terminal device, and may further learn permission information and registration information of an AA deployed in one or more other terminal devices. The terminal device and the other terminal devices belong to a same distributed system.

It should be noted that a process in which the terminal device deploys an app is similar to a process in which the terminal device deploys an AA. Details about the process in which the terminal device deploys the app are not described herein again.

The following describes an example of a process in which an app invokes an AA.

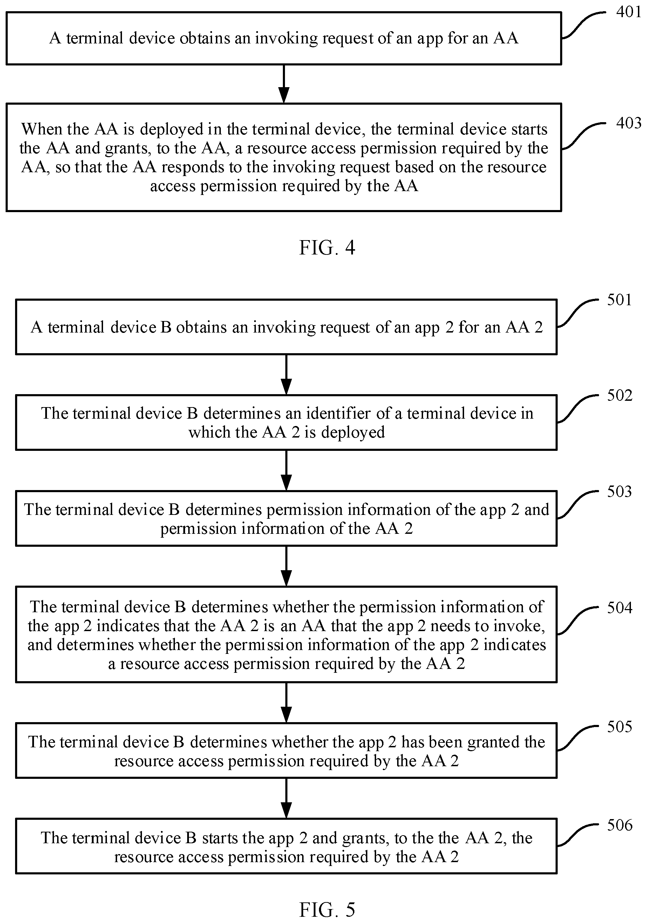

FIG. 4 is a flowchart of an atomic ability invoking method according to an embodiment of this application. As shown in FIG. 4, the method may include at least the following step 401 and step 403.

Step 401: A terminal device obtains an invoking request of an app for an AA.

In some embodiments, the app may be an application deployed in the terminal device.

In some embodiments, if the AA is deployed in the terminal device, the app may be a virtual app generated by the terminal device and corresponding to a target app when the target app deployed in a target terminal device requests to invoke the AA. A function of the virtual app is to initiate, in the terminal device, the invoking request for the AAbased on the invoking request of the target app for the AA. The target terminal device and the terminal device belong to a same distributed system.

Step 403: When the AA is deployed in the terminal device, the terminal device starts the AA and grants, to the started AA, a resource access permission required by the AA, so that the started AA responds to the invoking request based on the resource access permission required by the AA.

According to the technical solution in this embodiment of this application, in a process in which the app invokes the AA, the invoked AA has only the resource access permission required by the AA, to prevent the AA from accessing a corresponding system resource based on a resource access permission that the AA should not have. This reduces a risk of privacy data leakage more effectively.

The following uses an example in which an app initiating an invoking request and an AA that the app requests to invoke are deployed in a same terminal device, and specifically, uses an example in which the app initiating the invoking request is the application app 2 deployed in the terminal device B and the AA that the app requests to invoke is the atomic ability AA 2 deployed in the terminal device B. As shown in FIG. 5, a process in which the application app 2 invokes the atomic ability AA 2 may include the following steps.

Step 501: The terminal device B obtains an invoking request of the app 2 for the AA 2.

In some embodiments, the terminal device B may display a graphical user interface of the app 2 deployed in the terminal device B, and sense, by using the touch sensor, a service operation performed by the user in the graphical user interface. The app 2 may initiate invoking of the AA 2 under triggering of the service operation.

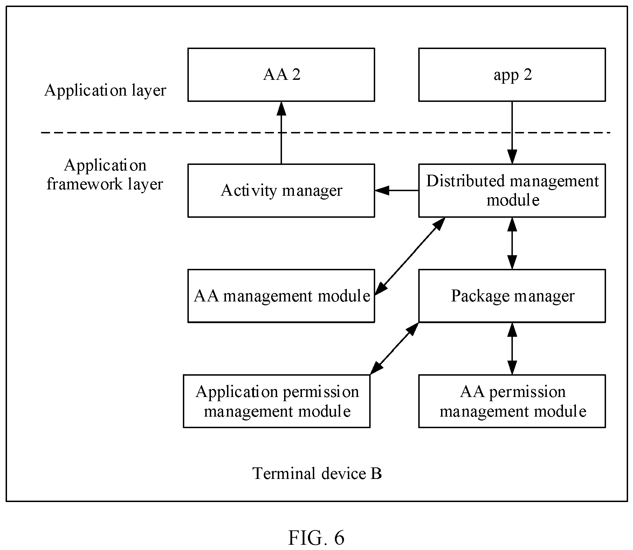

For example, as shown in FIG. 6, when triggered by the service operation, the app 2 may send, to a distributed management module, the invoking request of the app 2 for the AA 2. In addition, the distributed management module may parse the invoking request to obtain an identifier of the app 2, an identifier of the AA 2, and a corresponding request parameter.

Step 502: The terminal device B determines an identifier of the terminal device in which the AA 2 is deployed. For example, the distributed management module may invoke the AA management module based on the identifier of the AA 2, to query registration information of the AA 2. The registration information of the AA 2 is used to indicate the identifier of the terminal device in which the AA 2 is deployed.

It should be noted that if the terminal device that performs step 501 does not belong to any distributed system, or in other words, the terminal device does not establish a communication connection to another terminal device, the terminal device may not need to perform step 502.

Step 503: The terminal device B determines permission information of the app 2 and permission information of the AA2.

For example, the distributed management module may invoke an application permission management module and an AA permission management module based on the identifier of the app 2 and the identifier of the AA 2 by using a package manager, or directly invoke the application permission management module and the AA permission management module, to determine the permission information of the app 2 managed by the application permission management module, and determine the permission information of the AA 2 managed by the AA permission management module.

The permission information of the AA 2 indicates the resource access permission required by the AA 2. In other words, the permission information of the AA 2 indicates a resource access permission, and the resource access permission is the resource access permission required by the AA 2.

Step 504: The terminal device B determines whether the permission information of the app 2 indicates that the AA 2 is an AA that the app 2 needs to invoke, and determines whether the permission information of the app 2 indicates the resource access permission required by the AA 2.

In other words, in step 504, for the resource access permission indicated by the permission information of the AA 2, the terminal device may determine whether the permission information of the app 2 indicates that the resource access permission is the resource access permission required by the AA 2.

The determining whether the permission information of the app 2 indicates the resource access permission required by the AA 2 may include: determining whether a current resource access permission required by the AA 2 that is indicated by the permission information of the app 2 is the same as the resource access permission required by the AA 2.

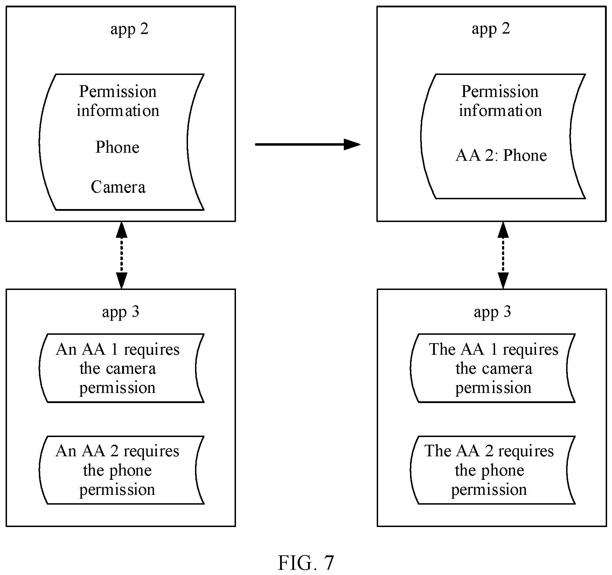

As shown in FIG. 7, the distributed application app 3 includes the atomic ability AA 1 and the atomic ability AA 2. A resource access permission required by the AA 1 is "Camera", that is, the AA 1 needs a permission to access the camera module. The resource access permission required by the AA 2 is "Phone", that is, the AA 2 needs a permission to access the phone module. If the app 2 needs to invoke the atomic ability AA 2 of the distributed application app 3, in some possible implementations, a configuration file of the app 2 may declare that resource access permissions required by the app 3 are "Camera" and "Phone", that is, the permission information of the app 2 can indicate that the resource access permissions required by the app 3 are "Camera" and "Phone". In this case, the permission information of the app 2 cannot indicate that the AA 2 is the AA that the app 2 needs to invoke, and even cannot indicate that the resource access permission required by the AA 2 is "Phone".

According to the technical solution in this embodiment of this application, permission information of an app should be able to indicate each AA that the app needs to invoke, and should be able to indicate a resource access permission required by each AA that the app needs to invoke. Correspondingly, as shown in FIG. 7, when the permission information of the AA 2 indicates that the resource access permission required by the AA 2 is "Phone", if the app 2 needs to invoke the AA 2, the configuration file of the app 2 should declare that the AA 2 is the AA that the app 2 needs to invoke, and declare that the resource access permission required by the AA 2 includes "Phone". In other words, the permission information of the app 2 should be able to indicate that the AA 2 is the AA that the app 2 needs to invoke, and be able to indicate that the resource access permission required by the AA2 includes "Phone".

If the permission information of the app 2 does not indicate that the AA 2 is the AA that the app 2 needs to invoke, or the permission information of the app 2 does not indicate that the resource access permission required by the AA 2 includes "Phone", it indicates that the app 2 may excessively apply for a resource access permission. In this case, the distributed management module may terminate invoking the AA 2 by the app 2. Correspondingly, the distributed management module may further generate and provide prompt information that the app 2 may excessively apply for the resource access permission, so that the user updates, based on the prompt information, the resource access permission granted to the app 2 or uninstalls the app 2 base on the prompt information, to prevent malicious access to privacy data because the app 2 excessively applies for the resource access permission.

If the permission information of the app 2 indicates that the AA 2 is the AA that the app 2 needs to invoke, and the permission information of the app 2 indicates the resource access permission required by the AA 2, the terminal device B may perform step 505: Determine, based on authorization information of the app 2, whether the app 2 has been granted the resource access permission required by the AA 2.

If the app 2 is not granted to the resource access permission required by the AA 2, the distributed management module may terminate invoking the AA 2 by the app 2. Correspondingly, the distributed management module may further generate and provide prompt information that the app 2 is not granted to the resource access permission required by the AA 2, so that the user performs a corresponding service operation on the terminal device B based on the prompt information. In this way, the terminal device B grants, to the app 2, the resource access permission required by the AA 2 or uninstalls the app 2.

When the identifier that is of the terminal device in which the AA 2 is deployed and that is determined in step 502 is an identifier of the terminal device B, that is, when the terminal device B learns that the AA 2 is deployed in the terminal device B, if the app 2 has been granted the resource access permission required by the AA 2, the terminal device B may perform step 506: Start the app 2 and grant, to the started the AA 2, the resource access permission required by the AA 2.

It may be understood that the started the AA 2 may respond to the invoking request based on the resource access permission granted to the AA 2. For example, the started AA 2 is granted to the "Phone" permission, and the started AA 2 may invoke the "Phone" module to access data of the "Phone" module based on a request parameter and the "Phone" permission that are carried in the invoking request.

In some embodiments, the distributed management module may request the activity manager to start the AA 2, and the activity manager may start the AA 2 at the request of the distributed management module. Starting the AA 2 may include: creating a service process of the AA 2, and granting, to the started AA 2, the resource access permission that is required by the AA 2 and that includes maintaining authorization information of the service process. The authorization information is used to indicate that the service process has the resource access permission required by the AA 2. More specifically, the activity manager may maintain the permission information/authorization information of the AA2 in a reentrant handle of the AA2 to grant, to the service process of the AA2, the resource access permission required by the AA 2.

It should be noted that, herein, the started AA 2 is granted to the resource access permission required by the AA 2. After the terminal device releases the service process of the AA 2, the AA 2 loses the resource access permission required by the AA 2. In this way, it is ensured that the resource access permission granted to the AA 2 loaded in the terminal device B is transferred to the AA 2 by an application that invokes the AA 2, to prevent an application that does not have a permission to invoke the AA 2 from maliciously invoking the AA 2 to access the system resource.

The following uses an example in which an app initiating an invoking request and an AA requesting to be invoked are deployed in different terminal devices, and specifically, uses an example in which the app initiating the invoking request is the application app 1 deployed in the terminal device A and the AA requesting to be invoked is the atomic ability AA 2 deployed in the terminal device B.

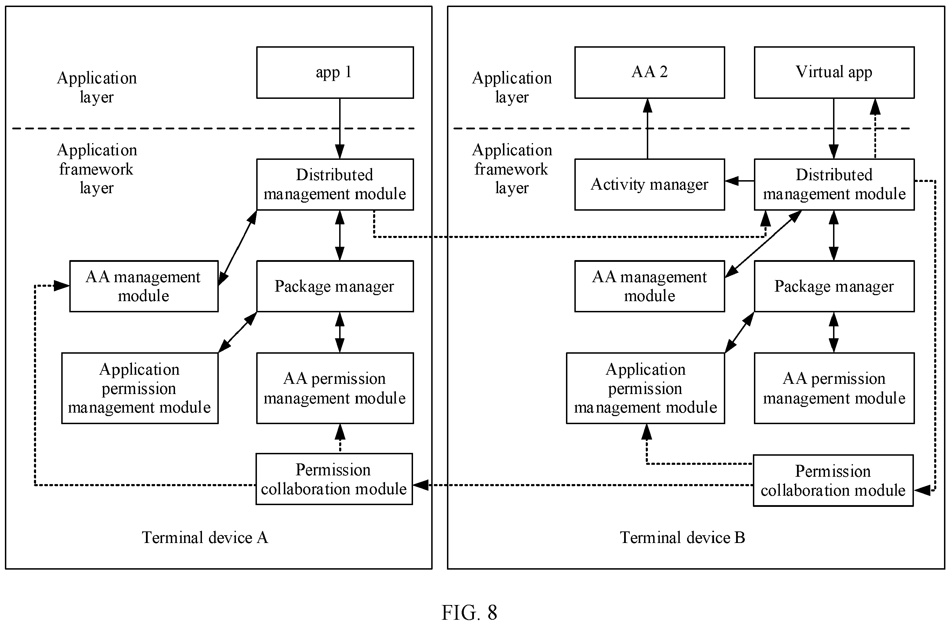

First, refer to an indication of a dashed arrow in FIG. 8. The terminal device B may send a collaboration message to the terminal device A by using a permission collaboration module or another function module of the terminal device B. The collaboration message may be used to indicate that the AA 2 is deployed in the terminal device B, or may be used to indicate the permission information of the AA 2. More specifically, the collaboration message may include the registration information of the AA 2 and the permission information of the AA 2. The registration information of the AA 2 may include the identifier of the terminal device B and the identifier of the AA 2.

Then, refer to an indication of a dashed arrow in FIG. 8. The terminal device A may receive the collaboration message from the terminal device B by using a permission collaboration module or another function module of the terminal device A. In addition, the permission collaboration module or an AA management module of the terminal device A may maintain/manage the registration information of the AA 2, and the permission collaboration module or the AA permission management module of the terminal device A may maintain/manage the permission information of the AA2.

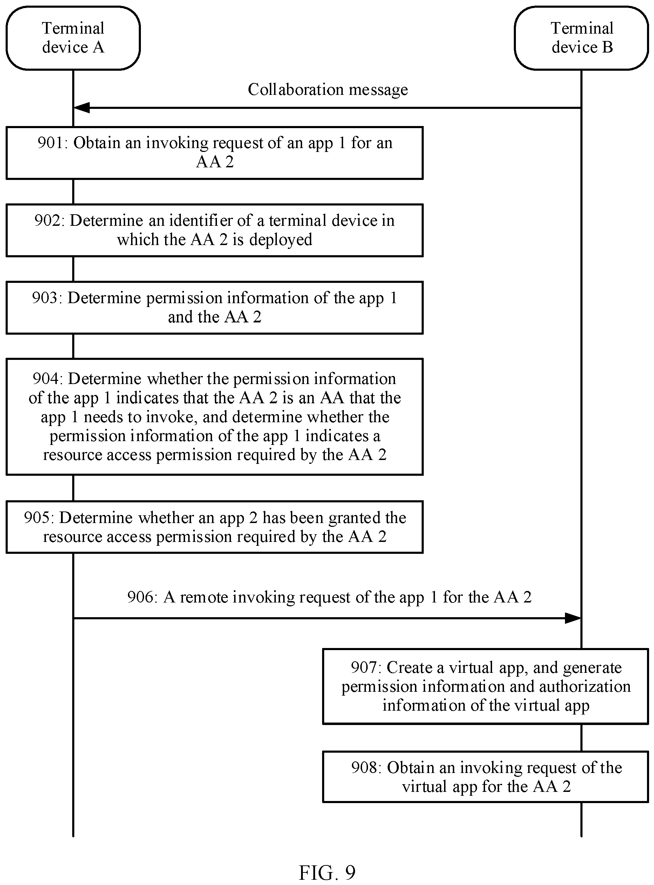

Subsequently, the app 1 deployed in the terminal device A may request to invoke the AA 2 deployed in the terminal device B. As shown in FIG. 9, a process in which the application app 1 invokes the atomic ability AA 2 may include the following steps.

Step 901: The terminal device A obtains an invoking request of the app 1 for the AA 2.

Step 902: The terminal device A determines the identifier of the terminal device in which the AA 2 is deployed.

Step 903: The terminal device A determines permission information of the app 1 and the permission information of the AA2.

Step 904: The terminal device A determines whether the permission information of the app 1 indicates that the AA 2 is an AA that the app 1 needs to invoke, and determines, based on an indication of the permission information of the AA 2, whether the permission information of the app 1 indicates the resource access permission required by the AA 2.

If the permission information of the app 1 indicates that the AA 2 is the AA that the app 1 needs to invoke, and the permission information of the app 1 indicates the resource access permission required by the AA 1, the terminal device A may perform step 905: Determine, based on authorization information of the app 1, whether the app 1 has been granted the resource access permission required by the AA 2.

A process in which the terminal device A performs step 901 to step 905 is similar to a process in which the terminal device B performs step 501 to step 505. The process in which the terminal device A performs step 901 to step 905 and an interaction relationship between function modules in the terminal device A are not described herein again.

When the terminal device A determines that the identifier of the terminal device in which the AA 2 is deployed is the identifier of the terminal device B, if the app 1 has been granted the resource access permission required by the AA 2, the terminal device A may perform step 906: Send a remote invoking request of the app 1 for the AA 2 to the terminal device B based on the identifier of the terminal device B. The remote invoking request may include the identifier of the app 1 initiating the invoking request and the identifier of the AA 2 requesting to be invoked, and further include an identifier of the terminal device A, the permission information of the app 1, the authorization information of the app 1, and a request parameter included in the invoking request of the app 1 for the AA 2.

In some embodiments, a difference from step 903 to step 905 is that, when the terminal device A determines that the identifier of the terminal device in which the AA 2 is deployed is the identifier of the terminal device B, the terminal device A may not need to perform step 903 to step 905, but after the permission information of the app 2 is further determined, step 906 is performed.

Step 907: The terminal device B creates a virtual app, and generates permission information and authorization information of the virtual app.

In some embodiments, after a distributed management module or another function module of the terminal device B receives the remote invoking request of the app 1 for the AA 2, the terminal device B may create a virtual app by using the distributed management module of the terminal device B. An identifier of the virtual app may include the identifier of the terminal device A and the identifier of the app 1. The virtual app is configured to send, in a subsequent process, an invoking request to the AA 1 deployed in the terminal device B. In addition, refer to an indication of a dashed arrow in FIG. 8. The application permission management module and/or the permission collaboration module of the terminal device B may generate and maintain the permission information and the authorization information of the virtual app. The permission information of the virtual app is the same as the permission information of the app 1. The authorization information of the virtual app is the same as the authorization information of the app 1.

Then, step 908: The terminal device B obtains an invoking request of the virtual app for the AA 2.

In some embodiments, the terminal device B may trigger the virtual app corresponding to the app 1 to send the invoking request of the virtual app for the AA 2 to the distributed management module of the terminal device B. The invoking request includes the identifier of the virtual app and the identifier of the AA 2, and may further include a request parameter included in an invoking request/a remote invoking request of the app 1 for the AA 1.

By performing step 907 and step 908, the terminal device B converts the remote invoking request of the app 1 for the AA 2 into a local invoking request of the virtual app for the AA 2 in the terminal device B.

Then, for the invoking request of the virtual app for the AA 2, the terminal device may perform a method similar to step 502 to step 506, so that the started AA 2 responds to the invoking request of the virtual app for the AA 2 based on the resource access permission granted to the started AA 2, to complete a process in which the app 1 invokes the AA2.

Based on a same concept as the foregoing method embodiments, an embodiment of this application further provides a communications apparatus. The communications apparatus includes units (or means) configured to implement the steps in the method shown in FIG. 4 and/or units (or means) configured to implement the steps performed by the terminal device A or the terminal device B in the methods shown in FIG. 5 and FIG. 9.

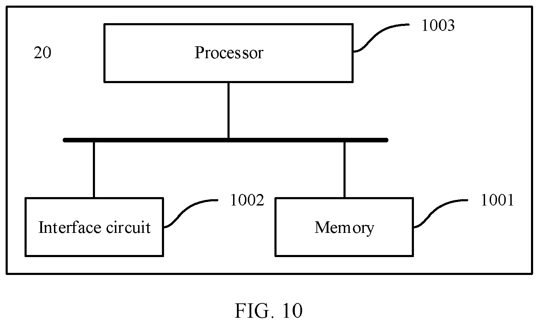

Based on a same concept as the foregoing method embodiments, as shown in FIG. 10, an embodiment of this application further provides a terminal device 20. The terminal device 20 is configured to implement the steps performed by the terminal device A and/or the terminal device B in the foregoing method embodiments. To avoid repetition, details are not described herein again.

The terminal device 20 includes: a memory 1001, configured to store computer instructions; an interface circuit 1002, configured to communicate with another terminal device; and a processor 1003, configured to execute the computer instructions in the memory 1001. When the computer instructions are executed by the processor, the processor 1003 is at least configured to: obtain a first invoking request of a first app for an AA; and when the AA is deployed in the terminal device, start the AA and grant, to the started AA, a resource access permission required by the AA, so that the started AA responds to the first invoking request based on the resource access permission required by the AA.

The processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in a memory. The memory may be integrated into the processor, or may be outside the processor and independently exist.

The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing network device, refer to a corresponding process in the foregoing method embodiments. Details are not described herein again.

It may be understood that the described apparatus embodiments are examples. For example, the module/unit division is merely logical function division, and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application.

Finally, it should be noted that the foregoing embodiments are merely intended for describing the technical solutions of this application, but not for limiting this application. Although this application is described in detail with reference to the foregoing embodiments, a person of ordinary skill in the art should understand that they may still make modifications to the technical solutions provided in the foregoing embodiments or make equivalent replacements to some technical features thereof, without departing from the spirit and scope of the technical solutions of embodiments of this application.

## Claims

1. An atomic ability invoking method, applied to a terminal device, wherein the method comprises:
obtaining a first invoking request of a first application app for an atomic ability AA;
determining a resource access permission based on permission information of the AA, wherein the resource access permission is a resource access permission required by the AA;
determining whether permission information of the first app indicates that the resource access permission is the resource access permission required by the AA, and determining, based on authorization information of the app, whether the app has been granted the resource access permission; and
when the AA is deployed in the terminal device, if the permission information of the first app indicates that the resource access permission is the resource access permission required by the AA, and the app has been granted the resource access permission, starting the AA and granting the resource access permission to the AA, so that the AA responds to the first invoking request based on the resource access permission.

2. The method according to claim 1, wherein
before the obtaining a first invoking request of a first app for an AA, the method further comprises:
receiving, from a target terminal device, a second invoking request of a second app for the AA, wherein the second app is deployed in the target terminal device, and the second invoking request comprises permission information of the second app and authorization information of the second app;
generating a virtual app corresponding to the second app, wherein the first app is the virtual app; and
generating permission information of the virtual app and authorization information of the virtual app, wherein the permission information of the virtual app is the same as the permission information of the second app, and the authorization information of the virtual app is the same as the authorization information of the second app.

3. The method according to claim 1 or 2, wherein
before the obtaining a first invoking request of a first app for an AA, the method further comprises: receiving a collaboration message from the target terminal device, wherein the collaboration message comprises registration information of the AA and the permission information of the AA, and the registration information of the AA is used to indicate that the AA is deployed in the target terminal device; and
after the obtaining a first invoking request of a first app for an AA, the method further comprises: sending a third invoking request of the first app for the AA to the target terminal device based on the first invoking request and the registration information of the AA, wherein the third invoking request comprises the permission information of the first app and the authorization information of the first app.

4. A terminal device, comprising a processor and a memory, wherein the memory is configured to store computer instructions, and when the processor executes the computer instructions stored in the memory, the processor is configured to:
obtain a first invoking request of a first application app for an atomic ability AA;
determine a resource access permission based on permission information of the AA, wherein the resource access permission is a resource access permission required by the AA;
determine whether permission information of the first app indicates the resource access permission, and determine whether the app has been granted the resource access permission; and
when the AA is deployed in the terminal device, if the permission information of the first app indicates that the resource access permission is the resource access permission required by the AA, and the app has been granted the resource access permission, start the AA and grant the resource access permission to the AA, so that the AA responds to the first invoking request based on the resource access permission.

5. The terminal device according to claim 4, wherein the terminal device further comprises an interface circuit, and the processor is further configured to:
receive, from a target terminal device by using the interface circuit, a second invoking request of a second app for the AA, wherein the second app is deployed in the target terminal device, and the second invoking request comprises permission information of the second app and authorization information of the second app;
generate a virtual app corresponding to the second app, wherein the first app is the virtual app; and
generate permission information of the virtual app and/or authorization information of the virtual app, wherein the permission information of the virtual app is the same as the permission information of the second app, and the authorization information of the virtual app is the same as the authorization information of the second app.

6. The terminal device according to claim 4 or 5, wherein the terminal device further comprises the interface circuit, and the processor is further configured to:
receive a collaboration message from the target terminal device by using the interface circuit, wherein the collaboration message comprises registration information of the AA and the permission information of the AA, and the registration information of the AA is used to indicate that the AA is deployed in the target terminal device; and
send a third invoking request of the first app for the AA to the target terminal device based on the first invoking request and the registration information of the AA, wherein the third invoking request comprises the permission information of the first app and the authorization information of the first app.

7. A communications apparatus, applied to a terminal device, wherein the communications apparatus is configured to implement the method according to any one of claims 1 to 3.

8. A terminal device, comprising the communications apparatus according to claim 7.

9. A computer-readable storage medium, configured to store computer instructions, wherein when the computer instructions are executed by a processor of a terminal device, the terminal device is enabled to implement the method according to any one of claims 1 to 3.
